# FASCICULE DE BREVET EUROPEEN

(11) **EP 4 426 566 B1**
(45) Date de publication et mention de la délivrance du brevet: **03.12.2025**
(21) Numéro de dépôt: 22803040.9
(22) Date de dépôt: 25.10.2022
(51) Int. Cl.: B60C 9/00, B60C 9/08

(54) **ARMATURES DE CARCASSE DE PNEUMATIQUE POUR AVION**
VERSTÄRKUNGEN FÜR FLUGZEUGREIFENKARKASSEN
AIRCRAFT TIRE CARCASS REINFORCEMENTS

(30) Priorité: 04.11.2021 FR 2111701
(43) Date de publication de la demande: 11.09.2024
(73) Titulaire: COMPAGNIE GENERALE DES ETABLISSEMENTS MICHELIN, 63000 Clermont-Ferrand (FR)
(72) Inventeur: ROMERO DE LA OSA, Marc, 63040 CLERMONT-FERRAND Cedex 9 (FR); DEUX, Thierry, 63040 CLERMONT-FERRAND Cedex 9 (FR); DIDANE, Nizar, 63040 CLERMONT-FERRAND Cedex 9 (FR); GOURDIN, Julie, 63040 CLERMONT-FERRAND Cedex 9 (FR)
(74) Mandataire: M.F.P. Michelin
(86) Numéro de dépôt international: PCT/FR2022/052021
(87) Numéro de publication internationale: WO 2023/079226

(56) Documents cités:
- EP-A1- 2 045 379
- EP-B1- 1 381 525
- US-A1- 2010 024 948

## Description

La présente invention concerne un pneumatique pour avion à armature de carcasse radiale. Ces pneumatiques sont destinés à porter de lourdes charges et à être gonflé à des pressions relativement fortes au-dessus de 10 bars.

Un pneumatique d'avion selon l'invention, a une bande de roulement, une armature de sommet et une armature de carcasse radiale, cette armature de carcasse radiale comportant des couches de carcasse comprenant une pluralité d'éléments de renfort textiles orientés sensiblement radialement (c'est-à-dire faisant un angle compris entre 75° et 105° avec la direction circonférentielle), cette armature étant ancrée à au moins une armature de renforcement circonférentiel dans chaque bourrelet, et le plus souvent à une seule appelée tringle. Les éléments de renfort desdites armatures sont enroulés autour de ladite tringle de l'intérieur à l'extérieur ou inversement en formant des retournements dont les extrémités respectives sont radialement espacées par rapport à l'axe de rotation du pneumatique. Les conditions sévères sous lesquelles sont utilisés les pneumatiques pour avions sont telles que l'endurance des bourrelets est faible, en particulier au niveau des retournements de l'armature de carcasse.

L'endurance des bourrelets de pneumatiques pour avions se doit cependant d'être améliorée, en effet lesdits bourrelets subissent de fortes surcharges pouvant leur conférer des écrasements de l'ordre de 50% et plus de leur hauteur. Par ailleurs le nombre nécessaire de couches de carcasse, généralement formées d'éléments de renfort en polyamide aliphatique ou composites, c'est-à-dire formés de filés de modules différents, pour supporter la tension due à la pression dite d'épreuve qui, comme connu, doit être égale à quatre fois la pression de service. Le nombre important desdites couches de carcasse entraîne de manière évidente la multiplication des extrémités libres d'éléments de renfort, la multiplication des interfaces entre couches, des pertes hystérétiques plus importantes et donc des températures de fonctionnement plus élevées, autant de facteurs propices à une augmentation de la fatigue des bourrelets et à une limitation de leur endurance.

Des solutions avec des câbles composites ont notamment été présentées par le brevet EP1381525 et particulièrement des composites formés d'au moins deux filés à haut module d'élasticité et d'un seul filé à bas module d'élasticité, plus précisément de deux filés en polyamide aromatique ou aramide, et d'un filé en polyamide aliphatique (plus précisément en Nylon).

Un pneumatique radial pour avion est connu du document US 2010/024948 A.

Cependant les composites décrits dans l'état de l'art ne sont pas un optimum notamment pour deux performances essentielles des pneumatiques avions à savoir l'endurance et la masse. Les inventeurs se sont donnés pour objectif d'améliorer ces dites performances.

Cette amélioration est obtenue par un pneumatique radial pour avion, ayant une bande de roulement, une armature de sommet et une armature de carcasse radiale,
- cette armature de carcasse radiale comportant une pluralité de couches de carcasse constituées d'éléments de renfort textiles orientés sensiblement radialement, c'est-à-dire faisant un angle compris entre 75° et 105° avec la direction circonférentielle (XX'), cette armature étant ancrée à au moins une armature de renforcement circonférentiel dans chaque bourrelet,
- les éléments de renfort radiaux des couches de carcasse de l'armature de carcasse sont des câbles composites, comprenant au moins un filé en polyamide aromatique et dont la Force à rupture est FR mesurée selon la norme D885/D885M - 10A (2014) et ces éléments ont une déformation pour une force appliquée égale à FR/4 au moins égale à 4.6% et au plus égale à 6.5%,
- la ténacité des éléments de renfort des couches de carcasse étant au moins égale à 80 daN/mm2,
- la densité linéaire du ou des filés en polyamide aromatique étant au moins égale à 210 tex.

En effet, l'optimisation des bourrelets ne consiste étonnamment pas à rechercher les éléments de renfort ayant une bonne tenue à la fatigue et présentant l'effort à rupture le plus élevé possible pour une masse de renfort la plus faible possible. Outre les aspects de résistance à la pression dite d'épreuve qui est égale à quatre fois la pression de service, des recherches sur les conditions d'atterrissage complexes à observer ou à simuler ont montré que quelle que soit la ténacité du renfort la déformation des pneumatiques dans ces conditions extrêmes, était quasi identique. Dans de telles conditions, il est intéressant d'utiliser des éléments de renfort tels que lorsque le pneumatique est à un écrasement de plus de 50%, chaque couche de carcasse reste en extension et donc des éléments de renfort à haute ténacité mais aussi à haute déformation notamment au niveau de la pression d'usage qui est au quart de la pression de rupture. L'expérience a montré qu'il était nécessaire pour optimiser les performances du pneumatique que la déformation des éléments de renfort des couches de carcasse à la pression d'usage, c'est-à-dire au quart de la force à rupture soit au moins égale à 4.6%. Avec cette déformation en pression, les éléments de renfort des couches de carcasse ne passent pas en compression lors de l'atterrissage. Lorsque le quart de la force à rupture est au moins égale à 5%, de préférence au moins égale 5.3%, les éléments de renfort des couches de carcasse ne passent pas en compression lors d'atterrissages compliqués par vent de travers qui surcharge un côté de l'architecture de la carcasse par rapport à l'autre. Par ailleurs, les modules élastiques des renforts étant plus faibles sur cette plage de sollicitation comparativement aux cycles subis par les couches de carcasse des pneumatiques selon l'état de l'art, les cycles de tension baissent et la résistance à la fatigue des couches de carcasse augmente. Par ailleurs pour obtenir une pression dite d'épreuve conforme à la pression d'usage pour une masse acceptable, les éléments de renfort des couches de carcasse doivent avoir une ténacité au moins égale à 80 daN/mm² et préférence au moins égale à 88 daN/mm². Par ailleurs pour ne pas alourdir le pneumatique en multipliant le nombre de couches de carcasse, il est essentiel que les éléments de renfort des couches de carcasse comportent au moins un filé de polyamide aromatique et que la densité linéaire du ou des filés de polyamide aromatique dépasse 210 tex. Pour une armature de carcasse avec des câbles hybrides (ou câbles composites) avec un filé de polyamide aromatique dont la densité linéaire du ou des filé de polyamide aromatique est inférieur à 180 tex, il faut pour un pneumatique avion gonflé à 15 bars à pression nominale de 8 à 9 couches de carcasse, ce qui a un coût prohibitif en fabrication. Avec les constructions de câbles hybrides visées, les pneumatiques avion gonflé à 15 bars à pression nominale moins de 6 couches de carcasse, voire moins de 5 couches de carcasse.

Les filés sont composés de filaments. Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyamide aliphatique, on entend un filament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Le pneumatique d'avion selon l'invention est tel que les éléments de renfort radiaux des couches de carcasse de l'armature de carcasse sont des câbles composites dont la Force à rupture est FR mesurée selon la norme D885/D885M - 10A (2014) et ces éléments ont une déformation pour une force appliquée égale à FR/4 au plus égale à 6.5%. Au-delà d'une telle valeur, le pneumatique se déforme excessivement à la pression nominale. Pour limiter l'encombrement, il est alors nécessaire de limiter la largeur du sommet et donc le volume de gomme à user du pneumatique, ce qui n'est pas dans la logique de l'invention.

Avantageusement la ténacité des éléments de renfort des couches de carcasse de l'armature de carcasse est au plus égale à 120 daN/mm². Une ténacité supérieure exigerait un taux de polyamide aromatique important et surtout un taux de polyamide aliphatique ne permettant plus à celui-ci de jouer son rôle de protection de l'intégrité du câble notamment en compression, rôle essentiel pour un renfort d'une couche de carcasse.

Avantageusement le diamètre du pneumatique avion selon l'invention est au plus égal à 1450 mm. En effet les pneumatiques de plus gros diamètre ont des conditions d'usage telles que l'invention n'amène pas de gains très significatifs.

Préférentiellement les éléments de renfort des couches de carcasse sont des câbles composites composés de deux filés de polyamide aromatique d'une masse linéique comprise entre 240 et 260 g au km et d'un filé de polyamide aliphatique d'une masse linéique comprise entre 200 et 220 g au km, de torsion comprise entre 230 et 310 tours par mètre, les éléments de renfort de l'armature de carcasse étant répartis en couches de carcasse et étant disposés dans lesdites couches de carcasse selon un pas compris entre 1,0 mm et 1,3 mm.

Une autre variante conforme à l'invention est un pneumatique d'avion, dans lequel les éléments de renfort des couches de carcasse de l'armature de carcasse sont des câbles composites composés d'un filé de polyamide aromatique d'une masse linéique comprise entre 320 et 340 g au km et d'un filé de polyamide aliphatique d'une masse linéique comprise entre 130 et 220 g au km, de torsion entre 250 et 330 tours par mètre, les éléments de renfort de l'armature de carcasse étant disposés dans lesdites couches de carcasse selon un pas compris entre 0,9 mm et 1,2 mm.

Ainsi renforcées de câbles constitués de filés ayant des modules d'élasticité différents aux faibles déformations et plus faibles que ceux présentés dans l'état de l'art, amenant une plus grande déformation à la pression d'usage, les couches de l'armature de carcasse sont, de manière surprenante, plus à mêmes de résister aux cycles d'usage.

Il est connu, que dans le cas d'un pneumatique pour avion, les câbles composites utilisés dans le pneumatique selon l'invention soient formés d'au moins deux filés à haut module d'élasticité et d'un seul filé à bas module d'élasticité, lesdits câbles présentant le meilleur compromis entre les deux propriétés que sont l'allègement du pneumatique et la résistance desdits câbles à la fatigue. Les trois filés ci-dessus sont individuellement surtordus de manière appropriée et sont ensuite retordus ensemble pour former l'élément de renfort. Néanmoins l'expérience montre de façon étonnante qu'un pneumatique selon l'invention, dans lequel les éléments de renfort des couches de carcasse sont constitués, d'un filé à haut module d'élasticité mais d'une densité au moins égale à 210 tex et d'un seul filé à bas module d'élasticité a une performance intéressante.

Les couches de câbles composites ou câbles hybrides, décrites ci-dessus sont obtenues par enrobage de ces câbles dans un mélange caoutchouteux dit mélange de calandrage, le nombre de câbles par centimètre de nappe, mesuré perpendiculairement à la direction desdits câbles étant calculé pour obtenir la résistance à la tension nécessaire.

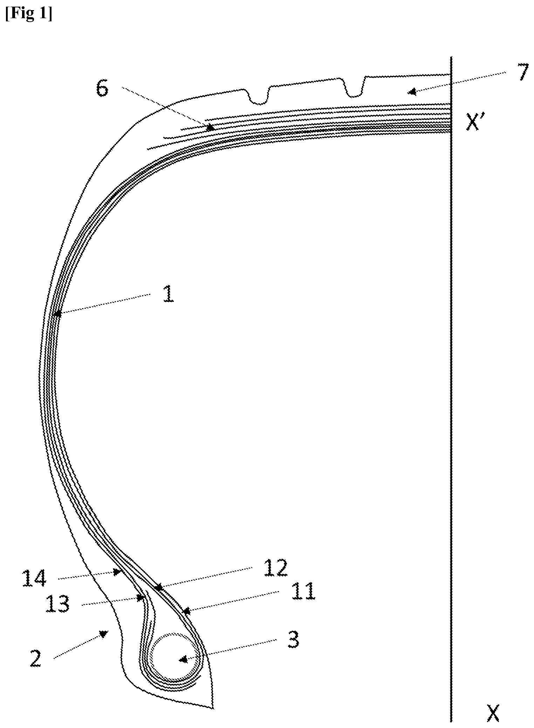

Les caractéristiques de l'invention sont illustrées par [Fig.1], schématique et non représentée à l'échelle représentant une demi-coupe méridienne du pneumatique selon l'invention.

L'invention a été testée sur un pneumatique de dimension normalisée 1400 x 530 R 23. L'armature de carcasse 1 est formée de quatre couches de câbles textiles radiaux (11, 12, 13, 14). Il faut entendre par câbles radiaux d'un pneumatique d'avion des câbles ou éléments de renfort faisant avec la direction circonférentielle des angles pouvant être compris dans l'intervalle 90° ± 15°. Les quatre couches sont enroulées dans chaque bourrelet (2) autour d'une tringle (3), deux étant enroulées de telle sorte que leurs extrémités soient radialement intérieures à la tringles, les deux autres de telle sorte que leurs extrémités soient radialement extérieures à la tringle et ce dans chaque bourrelet. Une bande de roulement 7, des couches extérieures de protection du sommet 6, complètent, comme connu, la constitution du pneumatique étudié.

Le pneumatique selon l'invention est comparé à un pneumatique témoin tel que le décrit EP1381525.

Pour le pneumatique témoin, les quatre couches d'armature de carcasse du pneumatique d'avion considéré sont formées de câbles composites constitués de deux filés en polyamide aromatique, chaque filé ayant un titre de 330 tex, individuellement surtordu d'une torsion en S de 250 tours/mètre, et d'un filé en polyamide aliphatique (plus précisément en Nylon) dont le titre est égal à 188 tex, ledit filé étant individuellement surtordu d'une torsion en S de 250 tours/mètre. Les trois filés ainsi préalablement tordus sur eux-mêmes sont ensuite retordus ensemble avec une torsion en Z de 270 tours/mètre pour former le câble prêt à l'usage en couches. Dans le cas présent, le câble employé a une ténacité sensiblement égale à 128 daN/mm² et une déformation à FR/4 proche de 4.2%. Les éléments de renfort sont répartis dans chaque couche de carcasse selon un pas égal à 1.25 mm.

L'invention est testée avec deux types de câbles composites. Pour le premier pneumatique selon l'invention I1, les composites sont constitués de deux filés en polyamide aromatique, chaque filé ayant un titre de 250 tex, individuellement surtordu d'une torsion en S de 270 tours/mètre, et d'un filé en polyamide aliphatique (plus précisément en Nylon) dont le titre est égal à 210 tex, ledit filé étant individuellement surtordu d'une torsion en S de 270 tours/mètre. Les trois filés ainsi préalablement tordus sur eux-mêmes sont ensuite retordus ensemble avec une torsion en Z de 270 tours/mètre pour former le câble prêt à l'usage en couches. Dans le cas présent, le câble employé a une ténacité sensiblement égale à 112 daN/mm² et une déformation à FR/4 proche de 5.4%. Ce mode de réalisation a été simulé numériquement et fabriqué pour être testé sur les tests d'homologation en vigueur. Les éléments de renfort sont répartis dans chaque couche de carcasse selon un pas égal à 1.0 mm.

Pour le second pneumatique selon l'invention I2, les composites sont constitués de d'un filé en polyamide aromatique, chaque filé ayant un titre de 330 tex, individuellement surtordu d'une torsion en S de 290 tours/mètre, et d'un filé en polyamide aliphatique (plus précisément en Nylon) dont le titre est égal à 210 tex, ledit filé étant individuellement surtordu d'une torsion en S de 290 tours/mètre. Les deux filés ainsi préalablement tordus sur eux-mêmes sont ensuite retordus ensemble avec une torsion en Z de 290 tours/mètre pour former le câble prêt à l'usage en couches. Dans le cas présent, le câble employé a une ténacité sensiblement égale à 92 daN/mm² et une déformation à FR/4 proche de 5.4%. Ce pneumatique a été simulé numériquement. Les éléments de renfort sont répartis dans chaque couche de carcasse selon un pas égal à 1.0 mm.

Dans les cas présenté, les quatre couches de carcasse utilisent le même câble avec le même pas, les mêmes épaisseurs et les mêmes formulations des mélanges caoutchouteux sans que cela ne soit une nécessité de l'invention, la densité l'épaisseur et la nature du mélange pouvant être différentes selon les couches au besoin.

Les mélanges caoutchouteux, qui enrobent les câbles composites des couches de carcasse sont identiques pour le pneumatique témoin et les pneumatiques selon l'invention. Il en est de même pour les couches de sommet et la bande de roulement.

Par ailleurs, un pneumatique I1 tel que décrit ci-dessus a été testé avec succès suivant la norme TSO C62e testant notamment l'endurance du pneumatique. Comparativement au pneumatique témoin de même dimension, l'allègement du pneumatique selon l'invention 1 est de 0.8 kg, soit 10% de la masse des couches de carcasses, ce qui démontre l'intérêt étonnant de ces câbles permettant de diminuer la masse des enveloppes en diminuant la ténacité des renforts de la carcasse.

Le pneumatique selon le mode de réalisation I1, a également été testé sur un volant métallique de diamètre 3 m à une vitesse correspondant à une vitesse de taxiage de 40 km :h à une flèche égale à 1.2 fois la flèche nominale définie dans la norme des pneumatiques avion (Aircraft Year Book 2013 édité par Tyre and rim association). Durant le test, le pneumatique est arrêté régulièrement pour ne pas endommager thermiquement le sommet selon des cycles prédéterminés. Au total les pneumatiques témoin et selon l'invention I1 ont parcouru 3800 km sans dommage apparent des nappes carcasse. Des renforts des couches de carcasse des deux pneumatiques sont ensuite prélevés et leurs forces à rupture résiduelles après test, sont mesurées. La déchéance de la force à rupture due à la compression pour le pneumatique témoin est égale à 15%. La déchéance de la force à rupture pour le pneumatique I1 selon l'invention est égale à 7%. Ceci démontre que le potentiel de roulage selon l'invention est amélioré par rapport au pneumatique témoin et donc l'intérêt de l'invention.

L'invention selon le mode de réalisation I2 a été estimé par calcul. Il satisfait les mêmes critères de conception que le pneumatique selon I1. Selon ces critères, il devrait être testé avec succès suivant la norme TSO C62e testant notamment l'endurance du pneumatique Comparativement au pneumatique témoin de même dimension, selon les outils de simulation le pneumatique selon l'invention I2 à la même masse que le pneumatique témoin. Cependant, des améliorations significatives de la performance de déchéance de la force à rupture (<7%) sont attendus.

## Revendications

1. Pneumatique radial pour avion, ayant une bande de roulement (7), une armature de sommet (6) et une armature de carcasse radiale (1),
• cette armature de carcasse radiale (1) comportant une pluralité de couches de carcasse (11,12,13,14) constituées d'éléments de renfort textiles orientés sensiblement radialement, c'est-à-dire faisant un angle compris entre 75° et 105° avec la direction circonférentielle (XX'), cette armature étant ancrée à au moins une armature de renforcement circonférentiel (3) dans chaque bourrelet (2),
• **caractérisé en ce que** les éléments de renfort radiaux des couches (11,12,13,14) de carcasse de l'armature de carcasse (1) sont des câbles composites, comprenant au moins un filé en polyamide aromatique et dont la Force à rupture est FR mesurée selon la norme D885/D885M - 10A (2014) et ces éléments ont une déformation pour une force appliquée égale à FR/4 au moins égale à 4.6%, et au plus égale à 6.5%,
• **en ce que** la ténacité des éléments de renfort des couches de carcasse (11,12,13,14) est au moins égale à 80 daN/mm²,
• **et en ce que** la densité linéaire du ou des filés en polyamide aromatique est au moins égale à 210 tex.

2. Pneumatique pour avion selon la revendication 1 dans lequel les éléments de renfort radiaux des couches de carcasse (11,12,13,14) de l'armature de carcasse (1) ont une déformation pour une force appliquée égale à FR/4 au moins égale à 5% de préférence au moins égale à 5.3%.

3. Pneumatique pour avion selon l'une quelconque des revendications précédentes dans lequel la ténacité des éléments de renfort des couches de carcasse (11,12,13,14) de l'armature de carcasse (1) est au moins égale à 88 daN/mm².

4. Pneumatique pour avion selon l'une quelconque des revendications précédentes dans lequel la ténacité des éléments de renfort des couches de carcasse (11,12,13,14) de l'armature de carcasse (1) est au plus égale à 120 daN/mm².

5. Pneumatique pour avion selon l'une quelconque des revendications précédentes dans lequel le diamètre du pneumatique est au plus égal à 1450 mm.

6. Pneumatique pour avion selon l'une quelconque des revendications 1 à 5 dans lequel les éléments de renfort des couches de carcasse (11,12,13,14) sont des câbles composites composés deux filés de polyamide aromatique d'une masse linéique comprise entre 240 et 260 g au km et d'un filé en polyamide aliphatique d'une masse linéique comprise entre 200 et 220 g au km, de torsion comprise entre 230 et 310 tours par mètre, les éléments de renfort étant répartis dans chaque couche de carcasse (11,12,13,14) selon un pas compris entre 1,0 mm et 1,3 mm.

7. Pneumatique pour avion selon l'une quelconque des revendications 1 à 6 dans lequel les éléments de renfort des couches de carcasse (11,12,13,14) de l'armature de carcasse (1) sont des câbles composites composés d'un filé de polyamide aromatique d'une masse linéique comprise entre 320 et 340 g au km et d'un filé de polyamide aliphatique d'une masse linéique comprise entre 130 et 220 g au km, de torsion comprise entre 250 et 330 tours par mètre, les éléments de renfort des couches de carcasse (11,12,13,14) de l'armature de carcasse (1) étant disposés dans lesdites couches de carcasse selon un pas compris entre 0,9 mm et 1,2 mm.

## Patentansprüche

1. Radialreifen für ein Flugzeug, welcher einen Laufstreifen (7), eine Scheitelbewehrung (6) und eine radiale Karkassenbewehrung (1) aufweist,
• wobei diese radiale Karkassenbewehrung (1) mehrere Karkassenlagen (11, 12, 13, 14) aufweist, die aus textilen Festigkeitsträgern bestehen, die im Wesentlichen radial ausgerichtet sind, das heißt einen Winkel zwischen 75° und 105° mit der Umfangsrichtung (XX') bilden, wobei diese Bewehrung an mindestens einer umlaufenden Verstärkungsbewehrung (3) in jedem Wulst (2) verankert ist,
• **dadurch gekennzeichnet, dass** die radialen Festigkeitsträger der Karkassenlagen (11, 12, 13, 14) der Karkassenbewehrung (1) Kompositkorde sind, die mindestens einen Faden aus aromatischem Polyamid umfassen und deren Reißkraft FR ist, gemessen nach der Norm D885/D885M - 10A (2014), und diese Festigkeitsträger eine Verformung für eine ausgeübte Kraft FR/4 aufweisen, die mindestens 4,6 % und höchstens 6,5 % beträgt,
• dadurch, dass die Zugfestigkeit der Festigkeitsträger der Karkassenlagen (11, 12, 13, 14) mindestens 80 daN/mm² beträgt,
• und dadurch, dass die lineare Dichte des oder der Fäden aus aromatischem Polyamid mindestens 210 tex beträgt.

2. Flugzeugreifen nach Anspruch 1, wobei die radialen Festigkeitsträger der Karkassenlagen (11, 12, 13, 14) der Karkassenbewehrung (1) eine Verformung für eine ausgeübte Kraft FR/4 aufweisen, die mindestens 5 %, vorzugsweise mindestens 5,3 % beträgt.

3. Flugzeugreifen nach einem der vorhergehenden Ansprüche, wobei die Zugfestigkeit der Festigkeitsträger der Karkassenlagen (11, 12, 13, 14) der Karkassenbewehrung (1) mindestens 88 daN/mm² beträgt.

4. Flugzeugreifen nach einem der vorhergehenden Ansprüche, wobei die Zugfestigkeit der Festigkeitsträger der Karkassenlagen (11, 12, 13, 14) der Karkassenbewehrung (1) höchstens 120 daN/mm² beträgt.

5. Flugzeugreifen nach einem der vorhergehenden Ansprüche, wobei der Durchmesser des Reifens höchstens 1450 mm beträgt.

6. Flugzeugreifen nach einem der Ansprüche 1 bis 5, wobei die Festigkeitsträger der Karkassenlagen (11, 12, 13, 14) Kompositkorde sind, die aus zwei Fäden aus aromatischem Polyamid mit einer längenbezogenen Masse zwischen 240 und 260 g pro km und einem Faden aus aliphatischem Polyamid mit einer längenbezogenen Masse zwischen 200 und 220 g pro km bestehen, mit einer Verdrehung zwischen 230 und 310 Drehungen pro Meter, wobei die Festigkeitsträger in jeder Karkassenlage (11, 12, 13, 14) mit einer Schrittweite zwischen 1,0 mm und 1,3 mm verteilt sind.

7. Flugzeugreifen nach einem der Ansprüche 1 bis 6, wobei die Festigkeitsträger der Karkassenlagen (11, 12, 13, 14) der Karkassenbewehrung (1) Kompositkorde sind, die aus einem Faden aus aromatischem Polyamid mit einer längenbezogenen Masse zwischen 320 und 340 g pro km und einem Faden aus aliphatischem Polyamid mit einer längenbezogenen Masse zwischen 130 und 220 g pro km bestehen, mit einer Verdrehung zwischen 250 und 330 Drehungen pro Meter, wobei die Festigkeitsträger der Karkassenlagen (11, 12, 13, 14) der Karkassenbewehrung (1) in den Karkassenlagen mit einer Schrittweite zwischen 0,9 mm und 1,2 mm angeordnet sind.

## Claims

1. Aircraft radial tyre, having a tread (7), a crown reinforcement (6) and a radial carcass reinforcement (1),
• this radial carcass reinforcement (1) comprising a plurality of carcass layers (11, 12, 13, 14) made up of textile reinforcing elements oriented substantially radially, which is to say making an angle of between 75° and 105° with the circumferential direction (XX'), this reinforcement being anchored to at least one circumferential reinforcement (3) in each bead (2),
• **characterized in that** the radial reinforcing elements of the carcass layers (11, 12, 13, 14) of the carcass reinforcement (1) are composite cords comprising at least one aromatic polyamide filament yarn and of which the rupture force is FR, measured in accordance with the standard D885/D885M - 10A (2014) and these elements exhibit a deformation at least equal to 4.6% and at most equal to 6.5% for an applied force equal to FR/4,
• **in that** the tenacity of the reinforcing elements of the carcass layers (11, 12, 13, 14) is at least equal to 80 daN/mm²,
• **and in that** the linear density of the aromatic polyamide filament yarn or yarns is at least equal to 210 tex.

2. Aircraft tyre according to Claim 1, wherein the radial reinforcing elements of the carcass layers (11, 12, 13, 14) of the carcass reinforcement (1) exhibit a deformation at least equal to 5% and preferably at least equal to 5.3% for an applied force equal to FR/4.

3. Aircraft tyre according to either one of the preceding claims, wherein the tenacity of the reinforcing elements of the carcass layers (11, 12, 13, 14) of the carcass reinforcement (1) is at least equal to 88 daN/mm².

4. Aircraft tyre according to any one of the preceding claims, wherein the tenacity of the reinforcing elements of the carcass layers (11, 12, 13, 14) of the carcass reinforcement (1) is at most equal to 120 daN/mm².

5. Aircraft tyre according to any one of the preceding claims, wherein the diameter of the tyre is at most equal to 1450 mm.

6. Aircraft tyre according to any one of Claims 1 to 5, wherein the reinforcing elements of the carcass layers (11, 12, 13, 14) are composite cords made up of two aromatic polyamide filament yarns with a linear mass comprised between 240 and 260 g per km, and of one aliphatic polyamide filament yarn with a linear mass comprised between 200 and 220 g per km, with a twist comprised between 230 and 310 twists per metre, the reinforcing elements being distributed in each carcass layer (11, 12, 13, 14) at a pitch of between 1.0 mm and 1.3 mm.

7. Aircraft tyre according to any one of Claims 1 to 6, wherein the reinforcing elements of the carcass layers (11, 12, 13, 14) of the carcass reinforcement (1) are composite cords made up of one aromatic polyamide filament yarn with a linear mass comprised between 320 and 340 g per km, and of one aliphatic polyamide filament yarn with a linear mass comprised between 130 and 220 g per km, with a twist comprised between 250 and 330 twists per metre, the reinforcing elements of the carcass layers (11, 12, 13, 14) of the carcass reinforcement (1) being arranged in said carcass layers at a pitch of between 0.9 mm and 1.2 mm.
